# EUROPÄISCHE PATENTSCHRIFT

(11) **EP 1 448 402 B1**
(45) Veröffentlichungstag und Bekanntmachung des Hinweises auf die Patenterteilung: **08.06.2005**
(21) Anmeldenummer: 02802602.9
(22) Anmeldetag: 30.10.2002
(51) Int. Cl.: B60K 31/00

(54) **GESCHWINDIGKEITSREGLER MIT STOP-FUNKTION**
SPEED CONTROL WITH STOP FUNCTION
REGULATEUR DE VITESSE A FONCTION D'ARRET

(30) Priorität: 09.11.2001 DE 10155096
(43) Veröffentlichungstag der Anmeldung: 25.08.2004
(73) Patentinhaber: ROBERT BOSCH GMBH, 70442 Stuttgart (DE)
(72) Erfinder: MICHI, Harald, 75248 Oelbronn-Duerrn (DE); SCHERL, Michael, 71679 Asperg (DE); UHLER, Werner, 76646 Bruchsal (DE)
(86) Internationale Anmeldenummer: PCT/DE2002/004041
(87) Internationale Veröffentlichungsnummer: WO 2003/039902

(56) Entgegenhaltungen:
- DE-A- 19 833 645
- DE-A- 19 958 520

## Beschreibung

### Stand der Technik

Die Erfindung betrifft einen Geschwindigkeitsregler für Kraftfahrzeuge, mit einer Sensoreinrichtung zur Messung von Betriebsparametern des Fahrzeugs und zur Messung des Abstands zu einem vor dem Fahrzeug befindlichen Zielobjekt, einer Steuereinrichtung zur Steuerung der Geschwindigkeit oder Beschleunigung des Fahrzeugs in Abhängigkeit von den gemessenen Betriebsparametern und Abstandsdaten, einer Abschaltbefehl-Eingabeeinrichtung zum Abschalten der Steuereinrichtung und mit einer Abschaltfunktion zum Abschalten der Steuereinrichtung in Abhängigkeit von andern Bedienbefehlen des Fahrers.

Solche Geschwindigkeitsregler ermöglichen es, die Geschwindigkeit des Fahrzeugs auf eine vom Fahrer gewählte Wunschgeschwindigkeit zu regeln. Da die Sensoreinrichtung auch einen Abstandssensor aufweist, beispielsweise in der Form eines Radarsensors, eines Stereo-Kamerasystems oder dergleichen, kann die Fahrzeuggeschwindigkeit auch so geregelt werden, daß automatisch ein geeigneter Sicherheitsabstand zu einem vorausfahrenden Fahrzeug eingehalten wird, Mit Hilfe der Abschaltbefehl-Eingabeeinrichtung, die beispielsweise durch eine Befehlstaste am Lenkrad oder am Armaturenbrett gebildet wird, kann der Fahrer diese Regelfunktionen außer Kraft setzen. Auch andere Bedienbefehle des Fahrers, insbesondere die Betätigung des Bremspedals, haben den Effekt, daß die Regelfunktionen inaktiviert werden.

DE 19958520 offenbart ein Geschwindigkeitsregler für ein Fahrzeug mit einer Sensoreneinrichtung und mit einer Steuereinrichtung die mit einer Abschaltbefehleingabeeinrichtung versehen ist, gemäß dem Oberbegriff des Anspruchs 1.

Ein weiteres Beispiel eines solchen Regelsystems, das auch als ACC-System (Active Cruise Control) bekannt ist, wird beschrieben in "Adaptive Cruise Control System - Aspects and Development Trends" von Winner, Witte, Uhler und Lichtenberg, Robert Bosch GmbH, in SAE Technical Paper Series 961010, International Congress & Exposition, Detroit, 26.-29. Februar 1996. Da mit den verfügbaren Sensoreinrichtungen eine vollständige Erfassung und sichere Bewertung des Verkehrsumfeldes noch nicht möglich ist, eignen sich diese Systeme bisher vor allem für relativ stabile Verkehrssituationen wie z.B. das Fahren auf einer Autobahn oder Schnellstraße. Im innerstädtischen Verkehr oder bei Fahrten mit niedriger Geschwindigkeit auf kurvenreichen Strecken könnten dagegen die Unsicherheiten bei der Erfassung des jeweils relevanten Zielobjektes zu einem Unfallrisiko führen. Aus diesem Grund sind bekannte ACC-Systeme bisher so ausgelegt, daß sie sich nur oberhalb einer bestimmten Grenzgeschwindigkeit aktivieren lassen.

Es ist bereits vorschlagen worden, den Anwendungsbereich des ACC-Systems auf eine Verkehrssituation zu erweitern, die als Stop & Go Verkehr bezeichnet wird und die beispielsweise bei einem Verkehrsstau oder bei zähflüssigem Verkehr auftritt. Auch diese Verkehrssituation ist relativ stabil und eignet sich daher für eine automatische Abstandsregelung. Allerdings muß die Funktionalität so erweitert werden, daß auch Anhaltevorgänge und vorzugsweise auch Anfahrvorgänge automatisch gesteuert werden können. Bei Fahrzeugen mit Automatikgetriebe läßt sich dies durch Gas- und Brems-Steuersignale erreichen, die den gleichen Effekt wie die Betätigung des Gaspedals bzw. des Bremspedals durch den Fahrer haben. Dabei ist jedoch dafür Sorge zu tragen, daß die Verkehrssicherheit nicht durch für den Fahrer unerwartete Reaktionen des Fahrzeugs beeinträchtigt wird.

### Aufgabe, Lösung und Vorteile der Erfindung

Aufgabe der Erfindung ist es, einen Geschwindigkeitsregler zu schaffen, der es ermöglicht, das Fahrzeug ohne Beeinträchtigung der Verkehrssicherheit automatisch in den Stand zu bremsen und im Stand zu halten.

Diese Aufgabe wird erfindungsgemäß dadurch gelöst, daß die Abschaltbefehl-Eingabeeinrichtung unwirksam ist, wenn die Stop-Funktion aktiv ist und das Fahrzeug steht.

Bei einem Verkehrsstau kann der Fahrer die Stop-Funktion aktivieren, so daß das Fahrzeug automatisch in den Stand gebremst wird, sobald das unmittelbar vorausfahrende Fahrzeug anhält. Durch die Steuereinrichtung wird dabei automatisch die Fahrzeugbremse betätigt und gehalten, so daß das Fahrzeug nicht wieder anrollt, nachdem es zum Stillstand gekommen ist. Anders als bei herkömmlichen Fahrzeugen mit Automatikgetriebe braucht somit der Fahrer nicht den Fuß auf dem Bremspedal zu halten. Hierdurch wird eine deutliche Steigerung des Komforts und der Verkehrssicherheit erreicht.

Ohne zusätzliche Sicherheitsvorkehrungen bestünde in dieser Situation allerdings die Gefahr, daß der Fahrer durch einen einfachen Tastenbefehl den Geschwindigkeitsregler abschaltet, ohne zu bedenken, daß dann die Bremse nicht mehr automatisch gehalten wird und das Fahrzeug unbeabsichtigt anrollt. Diese Gefahr wird erfindungsgemäß dadurch vermieden, daß die Abschaltbefehl-Eingabeeinrichtung automatisch unwirksam gemacht wird, solange die Stop-Funktion aktiv ist und das Fahrzeug steht. Im Stand kann somit die Stop-Funktion nur durch einen anderen Bedienbefehl des Fahrers inaktiviert werden, beispielsweise durch Betätigen des Bremspedals, durch Anziehen der Handbremse oder dadurch, daß der Fahrer den Wählhebel des Automatikgetriebes in die Neutral- oder Parkposition bringt.

Vorteilhafte Ausgestaltungen Erfindung ergeben sich aus den Unteransprüchen.

Bevorzugt ist in der Steuereinrichtung nicht nur eine Stop-Funktion implementiert, sondern eine Stop & Go-Funktion, die bei Stop & Go Verkehr nicht nur das Anhalten, sondern auch das erneute Anfahren und das langsame Rollen des Fahrzeugs in Abhängigkeit vom Abstand zum Zielobjekt automatisch steuert. Ein Bedienbefehl, mit dem im Stand die Stop-Funktion oder Stop & Go-Funktion inaktiviert wird, kann auch dadurch gebildet werden, daß der Fahrer das Gaspedal betätigt. Normalerweise führt die Betätigung des Gaspedals bei einem ACC-System nicht zur Selbstabschaltung des Reglers, sondern lediglich dazu, daß die Regelung vorübergehend übersteuert wird. Wenn der Fahrer das Gaspedal wieder losläßt, wird dann automatisch die Regelung auf der Grundlage der bisherigen Wunschgeschwindigkeit oder des bisherigen Sollabstands zum vorausfahrenden Fahrzeug wieder aufgenommen. Dieses übersteuern mit Hilfe des Gaspedals ist grundsätzlich auch im Rahmen der Stop & Go Funktion möglich. Wenn der Fahrer jedoch das Gaspedal betätigt, während das Fahrzeug steht, spricht eine hohe Wahrscheinlichkeit dafür, daß der Fahrer den Stop & Go-Betrieb nicht fortsetzen sondern beispielsweise aus der Fahrzeugschlange ausscheren will. In dieser Situation ist es deshalb sinnvoll, auch die Betätigung des Gaspedals als Bedienbefehl zum Abschalten der Stop & Go-Funktion zu interpretieren. Dies führt auch nicht zu einer Beeinträchtigung der Verkehrssicherheit, da der Fahrer, wenn er das Gaspedal betätigt, ohnehin erwartet, daß das Fahrzeug anfährt.

### Zeichnung

Im folgenden werden Ausführungsbeispiele der Erfindung an der Zeichnung erläutert.

Es zeigen:
Figur 1 ein Blockdiagramm des Geschwindigkeitsreglers und zugehöriger Bedienungs- und Anzeigeelemente;
Figur 2 ein Diagramm zur Erläuterung von Geschwindigkeitsbereichen, in denen verschiedene Funktionen des Geschwindigkeitsreglers anwendbar sind; und
Figur 3 ein Flußdiagramm eines Programms, das in dem erfindungsgemäßen Geschwindigkeitsregler implementiert ist.

### Beschreibung von Ausführungsbeispielen

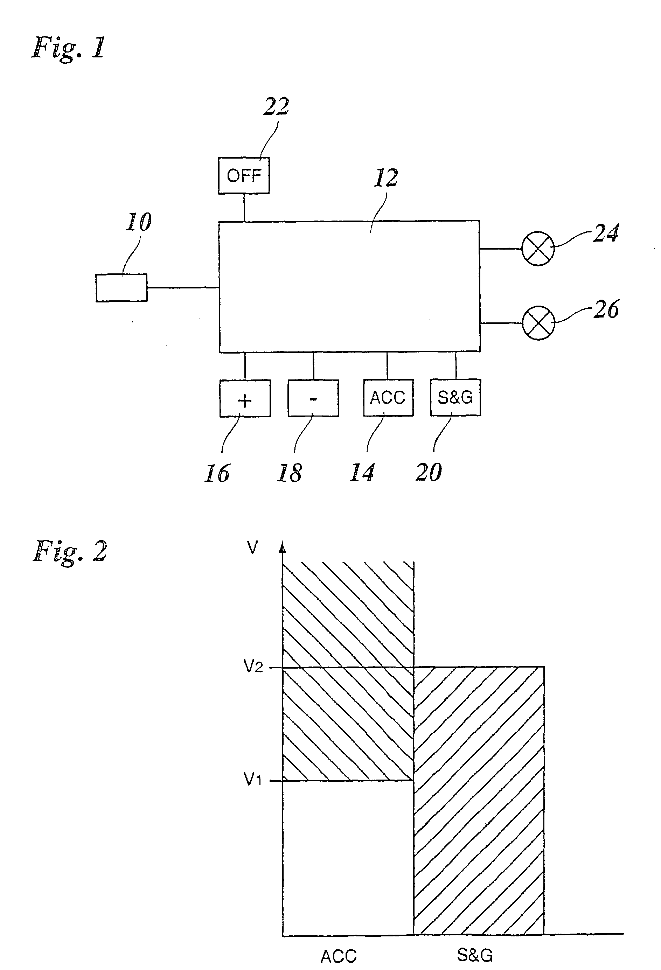

Da der Aufbau und die Wirkungsweise eines Geschwindigkeitsreglers mit ACC-Funktion bekannt sind, zeigt Figur 1 lediglich die wichtigsten Komponenten in einem Blockdiagramm. Eine Sensoreinrichtung 10 umfaßt einen Abstandssensor, beispielsweise einen Radarsensor, der den Abstand und die Relativgeschwindigkeit eines vorausfahrenden Fahrzeugs mißt. Sofern von dem Radarsensor mehrere Zielobjekte erfaßt werden, beispielsweise mehrere Fahrzeuge oder auch Standziele wie Straßenschilder und dergleichen, wird unter anderem durch Plausibilitätsauswertung ein Zielobjekt ausgewählt.

Zu der Sensoreinrichtung 10 gehören außerdem noch bekannte Sensoren, beispielsweise einen Fahrgeschwindigkeitssensor, Beschleunigungssensoren zur Erfassung der Längsbeschleunigung und der Querbeschleunigung, ein Giergeschwindigkeitssensor und dergleichen, die ohnehin im Fahrzeug vorhanden sind und deren Signale auch für andere Regelungszwecke genutzt werden. Die Signale des Abstandssensors und der übrigen Sensoren werden in einer elektronischen Steuereinrichtung 12 ausgewertet, die beispielsweise durch einen Mikrocomputer gebildet wird. Die Steuereinrichtung 12 wirkt auf das Antriebs- und Bremssystem des Fahrzeugs ein, um die Fahrgeschwindigkeit entweder auf eine vom Fahrer gewählte Wunschgeschwindigkeit oder auf einen geeigneten Abstand zum vorausfahrenden Fahrzeug zu regeln. Diese Regelfunktion, im folgenden als ACC-Funktion bezeichnet, wird vom Fahrer durch Betätigen einer ACC-Taste 14 aktiviert. Wenn bereits früher eine Wunschgeschwindigkeit gespeichert war, hat das Betätigen der ACC-Taste die Funktion, daß die Regelung auf diese Wunschgeschwindigkeit wieder aufgenommen wird ("resume"). Andernfalls wird die Wunschgeschwindigkeit gesetzt, indem der Fahrer kurzzeitig eine Taste 16 betätigt, nachdem das Fahrzeug die gewünschte Geschwindigkeit erreicht hat. Weitere oder anhaltende Betätigung der Taste 16 bewirkt eine schrittweise Erhöhung der Wunschgeschwindigkeit. Entsprechend bewirkt die Betätigung einer Taste 18 eine schrittweise Absenkung der Wunschgeschwindigkeit.

Die ACC-Funktion schaltet sich selbsttätig aus, sobald die Geschwindigkeit des Fahrzeugs einen bestimmten Wert V₁ von beispielsweise 40 km/h unterschreitet. Sobald die Geschwindigkeit unterhalb eines größeren Wertes V₂ liegt, der beispielsweise 50 km/h beträgt, kann der Fahrer jedoch durch Betätigen einer Taste 20 eine Stop & Go Funktion aktivieren. Von dieser Möglichkeit wird der Fahrer beispielsweise dann Gebrauch machen, wenn er auf ein Stauende auffährt. Die Stop & Go Funktion bewirkt dann, daß das Fahrzeug automatisch in einem passenden Abstand vor dem Stauende zum Stillstand gebracht wird. Wenn das vor dem eigenen Fahrzeug haltende Fahrzeug ein Stück vor fährt, bewirkt die Stop & Go Funktion, daß das eigene Fahrzeug automatisch anfährt und seinerseits ein entsprechendes Stück vor fährt. Die Geschwindigkeit des eigenen Fahrzeugs wird dabei automatisch auf die Geschwindigkeit V₂ oder eine kleinere, vom Fahrer mit Hilfe der Tasten 16 und 18 gewählte Wunschgeschwindigkeit begrenzt. Es soll hier jedoch angenommen werden, daß die Wunschgeschwindigkeit nicht kleiner als V₁ gewählt werden kann.

Mit einer Taste 22 (Abschaltbefehl-Eingabeeinrichtung) kann die ACC-Funktion und grundsätzlich auch die Stop & Go Funktion abgeschaltet werden.

Die Tasten 14, 16, 18, 20 und 22 können auch in einen Multifunktionshebel integriert sein, der beispielsweise am Lenkrad des Fahrzeugs angeordnet ist. Alternativ oder zusätzlich kann die Befehlseingabe auch mit Hilfe eines Spracherkennungssystems erfolgen.

Figur 2 illustriert die Geschwindigkeitsbereiche, in denen die ACC-Funktion und die Stop & Go Funktion aktivierbar sind. In dem Geschwindigkeitsbereich zwischen V₁ und V₂ sind beide Funktion aktivierbar, doch schließen sich die beiden Funktionen gegenseitig aus.

Das Aufleuchten einer Lampe 24 (Figur 1) zeigt an, daß die ACC-Funktion aktiv ist. Diese Lampe 26 weist einen Zwischenzustand zwischen dem eingeschalteten und dem ausgeschalteten Zustand auf. Dieser Zwischenzustand wird beispielsweise dadurch gebildet, daß die Lampe schwächer aufleuchtet, einen Farbumschlag zeigt oder daß lediglich eine Umrahmung der Lampe aufleuchtet, und zeigt an, daß die ACC-Funktion aktivierbar aber nicht aktiv ist. Entsprechend zeigt ein Aufleuchten oder ein Zwischenzustand einer Lampe 26 an, daß die Stop & Go Funktion aktiv bzw. aktivierbar ist.
Durch Betätigen des Gaspedals kann der Fahrer sowohl die ACC-Funktion als auch die Stop & Go Funktion übersteuern, um vorübergehend auf eine höhere Geschwindigkeit zu beschleunigen. Die Betätigung des Bremspedals hat dagegen ebenso wie die Betätigung der Taste 22 die Funktion, den Geschwindigkeitsregler zu deaktivieren. Wenn der Fahrer selbst das Fahrzeug zum Stillstand abgebremst hat, kann die Stop & Go Funktion nicht aus dem Stand wieder aktiviert werden, sondern erst nachdem der Fahrer selbst das Fahrzeug durch Betätigen des Gaspedals wieder in Bewegung gesetzt hat. Zum erneuten Einschalten der Stop & Go-Funktion ist in diesem Fall eine aktive Betätigung der Taste 20 durch den Fahrer erforderlich. Als Beispiel soll im folgenden angenommen werden, daß das Fahrzeug, bei dem der Geschwindigkeitsregler eingesetzt wird, ein Automatikgetriebe aufweist. Die Steuereinrichtung 12 kann dann auf das Antriebssystem des Fahrzeugs über ein Gas-Steuersignal einwirken, das die gleiche Funktion hat wie die Betätigung des Gaspedals durch den Fahrer. Entsprechend erfolgt der Eingriff in das Bremssystem durch ein Brems-Steuersignal, das die gleiche Wirkung hat wie die Betätigung des Bremspedals durch den Fahrer. Wenn die Stop & Go-Funktion aktiv ist und das Fahrzeug in den Stand gebremst wird, so wird zunächst das Gas-Steuersignal zurückgenommen, um das Fahrzeug ausrollen zu lassen, und schließlich wird das Brems-Steuersignal ausgegeben, um das Fahrzeug zum Stillstand zu bringen. Wenn das Fahrzeug steht, wird das Brems-Steuersignal gehalten, damit das Fahrzeug nicht wieder anrollt.

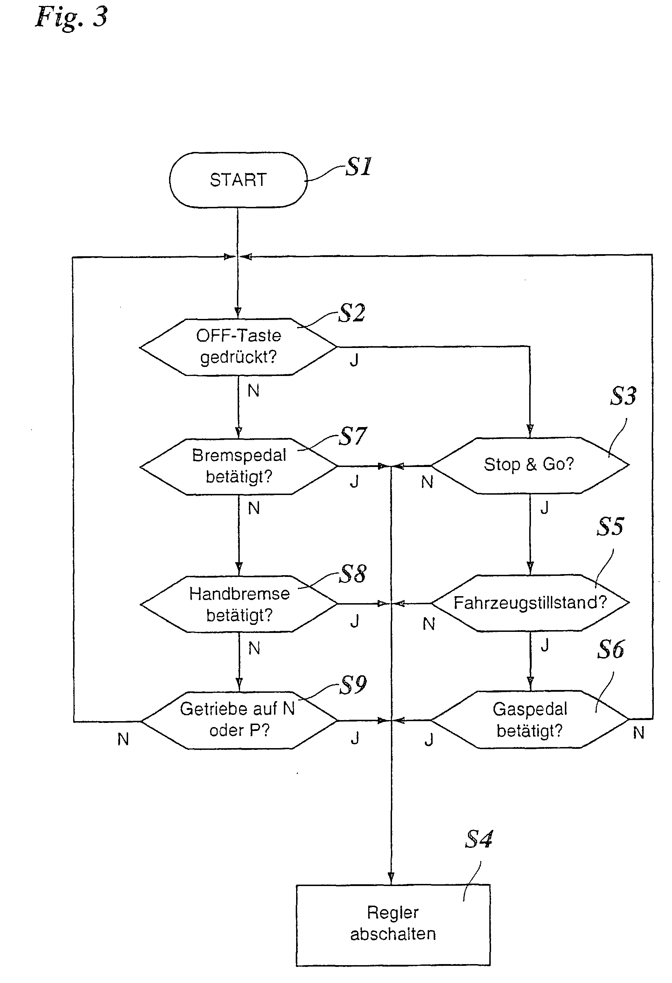

In der Steuereinrichtung 12 ist ein Programm implementiert, das periodisch, beispielsweise in Abständen in der Größenordnung von einigen Millisekunden abfragt, ob eine der Tasten 14, 16, 18, 20, 22 betätigt wurde oder ob der Fahrer einen anderen Bedienbefehl eingegeben hat, beispielsweise durch Betätigung des Gaspedals oder des Bremspedals oder durch Verstellen des Getriebe-Wählhebels. Figur 3 ist ein Flußdiagramm, das diejenigen Teile dieses Programms illustriert, die für das Verständnis der Erfindung von Bedeutung sind. Insbesondere wird durch dieses Programm festgelegt, unter welchen Bedingungen die Stop & Go-Funktion abgeschaltet werden kann. Dabei ist zu beachten, daß das Abschalten der Stop & Go-Funktion bei stehendem Fahrzeug zur Folge hat, daß das Brems-Steuersignal abfällt und somit das Fahrzeug anrollt. Damit es hierdurch nicht zu einer kritischen Situation oder einer Irritation des Fahrers kommt, wird die Abschaltung der Stop & Go-Funktion mit Hilfe der Taste 22 (Off-Taste) nur unter bestimmten Bedingungen zugelassen, wie nachstehend erläutert werden soll.

Mit Schritt S1 in Figur 3 wird das Programm gestartet, mit dem periodisch die vom Fahrer durch Tastenbetätigung oder Pedalbetätigung eingegebenen Bedienbefehle abgefragt werden. In Schritt S2 wird geprüft, ob im letzten Abfragezyklus die Off-Taste 22 gedrückt wurde.

Wenn dies der Fall ist, wird in Schritt S3 geprüft, ob die Stop & Go-Funktion aktiv ist. Wenn die Stop & Go-Funktion nicht aktiv ist, so bedeutet dies, daß die ACC-Funktion aktiv ist. In diesem Fall ist das Fahrzeug in Bewegung, und seine Geschwindigkeit beträgt mindestens V₁. In der Betätigung der Off-Taste 22 kommt daher der Wille des Fahrers zum Ausdruck, selbst die Kontrolle über das Fahrzeug zu übernehmen, und gegen eine Abschaltung der Regelfunktion bestehen keine Bedenken.

Es erfolgt deshalb eine Verzweigung zu Schritt S4, und die ACC-Funktion wird abgeschaltet. Der Geschwindigkeitsregler bleibt jedoch in einem Bereitschaftszustand, in dem die Tastenbefehle weiterhin abgefragt werden. Sofern die Fahrzeuggeschwindigkeit es zulaßt, kann daher die ACC-Funktion oder die Stop & Go-Funktion mit Hilfe der Tasten 14, 20 wieder aktiviert werden. Dies wird durch den Zwischenzustand der Lampen 24, 26 angezeigt.

Wenn in Schritt S3 festgestellt wurde, daß die Stop & Go-Funktion aktiv war, so wird in Schritt S5 weiter geprüft, ob das Fahrzeug steht. Nur wenn das Fahrzeug noch in Bewegung ist, wird in Schritt S4 die Stop & Go-Funktion abgeschaltet. Wenn das Fahrzeug steht, wird weiterhin in Schritt S6 abgefragt, ob der Fahrer das Gaspedal betätigt hat. Mit der Betätigung des Gaspedals gibt der Fahrer zu erkennen, daß er die Kontrolle über das Fahrzeug übernehmen will und daß er mit dem Anfahren des Fahrzeugs rechnet. In diesem Fall wird deshalb in Schritt 4 die Stop & Go-Funktion abgeschaltet. Hat der Fahrer dagegen das Gaspedal nicht betätigt, so erfolgt von Schritt S6 ein Rücksprung zu Schritt S2. Dies bedeutet, daß bei stehendem Fahrzeug und unbetätigtem Gaspedal die Betätigung der Off-Taste 22 ignoriert wird. Dadurch wird vermieden, daß das Fahrzeug anrollt, weil der Fahrer unbedacht die Off-Taste betätigt hat.

Wenn in Schritt S2 festgestellt wurde, daß die Off-Taste 22 nicht gedrückt wurde, so wird in Schritt S7 abgefragt, ob der Fahrer das Bremspedal betätigt hat. Bei Betätigung des Bremspedals erfolgt in jedem Fall eine Verzweigung zu Schritt S4, und die Regelfunktion (entweder die ACC-Funktion oder die Stop & Go-Funktion) wird abgeschaltet.

Hat der Fahrer das Bremspedal nicht betätigt, so wird in Schritt S8 überprüft, ob der Fahrer die Handbremse angezogen hat. Auch dies bewirkt eine Abschaltung der Regelfunktion in Schritt S4.

Wenn die Handbremse nicht betätigt wurde, wird schließlich in Schritt S9 geprüft, ob der Fahrer den Wählhebel des Automatikgetriebes in die Neutralposition (N) oder in die Parkposition (P) gebracht hat. Wenn dies der Fall ist, besteht keine Gefahr, daß das Fahrzeug überraschend anrollt, und die Regelfunktion wird in Schritt S4 abgeschaltet.

Andernfalls folgen die Schritte S10, S11 und S12, in denen die gleichen Abfragen durchgeführt werden wie in den Schritten S3, S5 und S6. Bei negativem Ergebnis dieser Abfragen erfolgt ein Rücksprung zu Schritt S2, und der Abfragezyklus wird wiederholt. Wenn dagegen die Stop & Go-Funktion aktiv ist, das Fahrzeug steht und in Schritt S12 die Betätigung des Gaspedals festgestellt wird, so wird in Schritt S4 der Regler abgeschaltet. Hierdurch ist es dem Fahrer möglich das Fahrzeug einfach durch Betätigung des Gaspedals wieder in Bewegung zu setzen, ohne daß der die OFF-Taste drücken muß.

Im Ergebnis wird somit sichergestellt, daß die Stop & Go-Funktion bei stehendem Fahrzeug nur durch Betätigung des Gaspedals oder des Bremspedals oder durch Anziehen der Handbremse oder durch Verstellen des Getriebewählhebels abgeschaltet werden kann, nicht hingegen durch einfache Betätigung der Off-Taste 22.

In einer modifizierten Ausführungsform kann in Schritt S5 anstelle des Fahrzeugstillstands auch eine allgemeinere Bedingung abgefragt werden, beispielsweise die Bedingung, daß die Steuereinrichtung das Brems-Steuersignal ausgibt oder daß in der Steuereinrichtung die Funktion "Bremsen in den Stand" ausgelöst wurde. In diesem Fall wird die Betätigung der Off-Taste 22 im Stop & Go-Betrieb nicht nur gesperrt, wenn das Fahrzeug tatsächlich steht, sondern schon dann, wenn der Stillstand des Fahrzeugs bevorsteht.

## Patentansprüche

1. Geschwindigkeitsregler für Kraftfahrzeuge, mit einer Sensoreinrichtung (10) zur Messung von Betriebsparametern des Fahrzeugs und zur Messung des Abstands zu einem vor dem Fahrzeug befindlichen Zielobjekt, einer Steuereinrichtung (12) zur Steuerung der Geschwindigkeit oder Beschleunigung des Fahrzeugs in Abhängigkeit von den gemessenen Betriebsparametern und Abstandsdaten, einer Abschaltbefehl-Eingabeeinrichtung (22) zum Abschalten der Steuereinrichtung (12) und mit einer Abschaltfunktion zum Abschalten der Steuereinrichtung in Abhängigkeit von anderen Bedienbefehlen des Fahrers, wobei die Steuereinrichtung (12) eine Stop-Funktion zum automatischen Bremsen des Fahrzeugs in den Stand aufweist, **dadurch gekennzeichnet daß** die Abschaltbefehl-Eingabeeinrichtung (22) unwirksam ist, wenn die Stop-Funktion aktiv ist und das Fahrzeug steht.

2. Geschwindigkeitsregler nach Anspruch 1, **dadurch gekennzeichnet, daß** die Steuereinrichtung (12) eine die Stop-Funktion einschließende Stop & Go-Funktion zur automatischen Steuerung von Anhalte- und Anfahrvorgängen des Fahrzeugs in Abhängigkeit vom Abstand zum Zielobjekt aufweist.

3. Geschwindigkeitsregler nach Anspruch 1 oder 2, **dadurch gekennzeichnet, daß** einer der Bedienbefehle des Fahrers, die die Abschaltfunktion auslösen, die Betätigung des Bremspedals durch den Fahrer ist.

4. Geschwindigkeitsregler nach einem der vorstehenden Ansprüche, **dadurch gekennzeichnet, daß** einer der Bedienbefehle des Fahrers, die die Abschaltfunktion auslösen, die Betätigung der Handbremse des Fahrzeugs ist.

5. Geschwindigkeitsregler nach einem vorstehenden Ansprüche, für Fahrzeuge mit Automatikgetriebe, **dadurch gekennzeichnet, daß** einer der Bedienbefehle des Fahrers, die die Abschaltfunktion auslösen, das Verstellen des Wählhebels des Automatikgetriebes auf eine von einer Vorwärts-Fahrposition verschiedene Position ist

6. Geschwindigkeitsregler nach einem der vorstehenden Ansprüche, **dadurch gekennzeichnet, daß** die Stop-Funktion bei stehendem Fahrzeug durch Betätigung des Gaspedals durch den Fahrer abschaltbar ist.

## Claims

1. Speed regulator for motor vehicles, with a sensor device (10) for the measurement of operating parameters of the vehicle and for measuring the distance to a target object located in front of the vehicle, with a control device (12) for controlling the speed or for accelerating the vehicle as a function of the measured operating parameters and distance data, with a cut-off command input device (22) for cutting off the control device (12) and with a cut-off function for cutting off the control device as a function of other operating commands of the driver, the control device (12) having a stop function for automatically braking the vehicle to a standstill, **characterized in that** the cut-off command input device (22) is inactive when the stop function is active and the vehicle is at a standstill.

2. Speed regulator according to Claim 1, **characterized in that** the control device (12) has a stop-and-go function, including the stop function, for the automatic control of stopping and starting actions of the vehicle as a function of the distance to the target object.

3. Speed regulator according to Claim 1 or 2, **characterized in that** one of the operating commands of the driver which trigger the cut-off function is the actuation of the brake pedal by the driver.

4. Speed regulator according to one of the preceding claims, **characterized in that** one of the operating commands of the driver which trigger the cut-off function is the actuation of the handbrake of the vehicle.

5. Speed regulator according to one of the preceding claims, for vehicles with automatic transmission, **characterized in that** one of the operating commands of the driver which trigger the cut-off function is the adjustment of the selector lever of the automatic transmission to a position different from a forward-drive position.

6. Speed regulator according to one of the preceding claims, **characterized in that**, with a vehicle at a standstill, the stop function can be cut off by means of the actuation of the accelerator pedal by the driver.

## Revendications

1. Régulateur de vitesse pour véhicules automobiles, comprenant un dispositif de détection (10) permettant de mesurer des paramètres de fonctionnement du véhicule et permettant de mesurer la distance par rapport à un objet cible situé devant le véhicule, un dispositif de commande (12) permettant de commander la vitesse ou l'accélération du véhicule en fonction des paramètres de fonctionnement mesurés et de données de distance, un dispositif d'entrée d'un ordre de désactivation (22) permettant de désactiver le dispositif de commande (12) et doté d'une fonction de désactivation pour désactiver le dispositif de commande en fonction d'autres ordres de commande du conducteur, le dispositif de commande (12) présentant une fonction d'arrêt pour le freinage automatique du véhicule sur place,
**caractérisé en ce que**
le dispositif d'entrée d'un ordre de désactivation (22) est inactif lorsque la fonction d'arrêt est active et que le véhicule est immobile.

2. Régulateur de vitesse selon la revendication 1,
**caractérisé en ce que**
le dispositif de commande (12) présente une fonction d'arrêt et de redémarrage incluant la fonction d'arrêt, pour la commande automatique de processus d'arrêt et de démarrage du véhicule en fonction de la distance par rapport à l'objet cible.

3. Régulateur de vitesse selon la revendication 1 ou 2,
**caractérisé en ce que**
l'un des ordres de commande du conducteur qui déclenchent la fonction de désactivation est l'actionnement de la pédale de frein par le conducteur.

4. Régulateur de vitesse selon l'une des revendications précédentes,
**caractérisé en ce que**
l'un des ordres de commande du conducteur qui déclenchent la fonction de désactivation est l'actionnement du frein à main du véhicule.

5. Régulateur de vitesse selon l'une des revendications précédentes, pour des véhicules dotés d'une boîte automatique,
**caractérisé en ce que**
l'un des ordres de commande du conducteur qui déclenchent la fonction de désactivation est le réglage du levier de sélection de la boîte de vitesses automatique sur une position différente de la position de conduite vers l'avant.

6. Régulateur de vitesse selon l'une des revendications précédentes,
**caractérisé en ce que**
la fonction d'arrêt, lorsque le véhicule est immobile, peut être désactivée par l'actionnement de la pédale d'accélérateur par le conducteur.
